# EUROPÄISCHE PATENTANMELDUNG

(11) **EP 4 151 948 A1**
(43) Veröffentlichungstag der Anmeldung: **22.03.2023**
(21) Anmeldenummer: 22194020.8
(22) Anmeldetag: 06.09.2022
(51) Int. Cl.: G01B 11/25, G06T 3/40, G06T 5/50, G06T 7/00, G01N 21/88

(54) **VERFAHREN UND VORRICHTUNG ZUR QUALITÄTSPRÜFUNG EINER KANTE EINES PLATTENFÖRMIGEN WERKSTÜCKS**

(30) Priorität: 17.09.2021 DE 102021124153
(71) Anmelder: HOMAG Plattenaufteiltechnik GmbH, 75365 Calw (DE)
(72) Erfinder: Friebolin, Manuel, 75365 Calw-Stammheim (DE); Kurz, Mario, 71149 Bondorf (DE); Kaiser, Jonathan, 71131 Jettingen (DE); Vogel, Julian, 75382 Althengstett (DE)
(74) Vertreter: DREISS Patentanwälte PartG mbB

(57) **Zusammenfassung**

Zur Qualitätsprüfung einer Kante (44) eines plattenförmigen Werkstücks (42) umfasst ein Verfahren folgende Schritte: a. Beobachten eines in der Nähe der Kante (44) liegenden Oberflächenbereichs (46) mittels einer Bilderfassungseinrichtung (36) aus einer zu einer Ebene des plattenförmigen Werkstücks (42) orthogonalen Richtung (40); b. Beleuchten der Kante (44) in einer zu einer Ebene des plattenförmigen Werkstücks (42) parallelen und zu einer Längsrichtung (48) der Kante (44) orthogonalen Richtung; c. Aufnehmen einer Mehrzahl von Bildern des Oberflächenbereichs (42) mittels der Bilderfassungseinrichtung (36) mit unterschiedlichen Belichtungszeiten; d. Verarbeiten der Mehrzahl von Bildern zu einem HDR-Bild mittels einer automatischen Verarbeitungseinrichtung (32); und e. Auswerten des im Schritt 1d erhaltenen HDR-Bilds im Hinblick auf Kantendefekte (56) mittels einer automatischen Auswerteeinrichtung (34).

## Beschreibung

Die Erfindung betrifft ein Verfahren und eine Vorrichtung zur Qualitätsprüfung einer Kante eines plattenförmigen Werkstücks nach den Oberbegriffen der nebengeordneten Ansprüche.

Zur Beurteilung des Sägeprozesses hinsichtlich richtiger Prozessparameter und dem Schärfezustand des Werkzeuges kann die Kantenqualität der hergestellten Werkstücke geprüft werden. Eine visuelle oder haptische Beurteilung durch den Maschinenbediener ermöglicht eine subjektive Beurteilung der Kantenqualität und kann zur Bewertung und Optimierung des Aufteilprozess verwendet werden.

Mittels eines optoelektronischen Systems kann die Kantenqualität bzw. Schnittqualität bei beschichteten Holzwerkstoffplatten (z.B. melaminbeschichteten Spanplatten) analysiert und objektiv bewertet werden. Ebenfalls können verschiedene Merkmale der Kantenqualität quantitativ beschrieben und so zur automatischen Überprüfung der Kantenqualität und Optimierung und Regelung des Aufteilprozess verwendet werden.

Beispielsweise beschreibt die DE 10 2008 009 842 A1 ein Verfahren zur Messung der Kantenschartigkeit nach oder während der Bearbeitung von Platten aus beschichteten oder unbeschichteten Werkstoffen. Dabei wird eine Kante der bearbeiteten Platte über ihre Länge hinweg mittels einer Messanordnung unter einem Anstellwinkel von 45° abgegriffen und eine Berührungslinie zwischen der abzugreifenden Kante und einer ebenen Anlagefläche durchleuchtet.

Bei der DE 10 2005 032 244 A1 wird mittels einer Zeilenkamera und einem Laser gearbeitet, um Kantendefekte erkennen zu können. Aus der DE 36 33 089 A1 ist es bekannt, einen Lichtstrahl von der Seite auf eine Kante zu lenken und die Kante von oben mittels einer Kamera zu betrachten.

Aufgabe der vorliegenden Erfindung ist es, ein Verfahren und eine Vorrichtung zur Qualitätsprüfung einer Kante eines plattenförmigen Werkstücks bereitzustellen, die besonders zuverlässig arbeiten und auch die Erfassung von optisch kaum sichtbaren Kantendefekten gestatten.

Diese Aufgabe wird durch ein Verfahren und eine Vorrichtung mit den Merkmalen der beiden nebengeordneten Ansprüche gelöst.

Vorteilhafte Weiterbildungen sind in Unteransprüchen angegeben.

Gemäß der in den nebengeordneten Ansprüchen definierten Erfindung wurde erkannt, dass zu einer guten Darstellung der Schnittkante ohne oder mit kleinen Kantendefekten (Kantenausbrüchen) das Bild nur kurz belichtet werden darf, um ein Übersättigen des Bildbereiches zu vermeiden. Ferner wurde erkannt, dass bei größeren Kantendefekten (Kantenausbrüchen) eine stärkere/längere Belichtung benötigt wird, um diese in der gesamten Tiefe auszuleuchten und die Kontur des Kantendefekts im Bild scharf darzustellen. Erfindungsgemäß werden daher zur Erstellung eines ideal belichteten Bilds der Kante und zur Darstellung sämtlicher Kantendefekte mehrere Bilder des betrachteten Bereichs mit unterschiedlicher Belichtung aufgenommen und diese mittels HDR-Bildtechnik (HDRI = High Dynamic Range Imaging) verarbeitet, sodass auf dem Ergebnisbild unterschiedliche Tiefen eines Kantendefekts sehr kontrastreich dargestellt werden. Hierdurch entsteht ein kontrastreiches Bild bis in die Tiefe des Kantendefekts. Ein "HDR-Bild" wird auch als "Hochkontrastbild" bezeichnet. Hierunter werden unterschiedliche Techniken zur Aufnahme und Wiedergabe von Bildern mit großen Helligkeitsunterschieden zusammengefasst. Dabei wird vorliegend die sogenannte "indirekte" Bilderzeugung verwendet, bei der indirekt mit einer Reihe unterschiedlich belichteter "normaler" Bilder desselben Bildbereichs gearbeitet wird. Die Einzelbilder werden anschließend per Software zu einem HDR-Bild kombiniert.

Nach der Erzeugung des HDR-Bildes kann die Linsenstreuung (Lens Flare) der Kamera herausgefiltert werden, um übermäßige Lichtstreuungen im Bild zu vermeiden.

Erfindungsgemäß werden die auf dem HDR-Bild sichtbaren Kantendefekte beispielsweise im Hinblick auf die Tiefe, Breite, etc., des Kantendefekts analysiert. Auf diese Weise ist eine objektive Bewertung der Qualität der Kante möglich. Auch kann bei der Auswertung eine geometrische Form des Kantendefekts ermittelt werden. Dies gestattet es, spezielle Qualitätsmerkmale bzw. Merkmale der erkannten Kantendefekte zu ermitteln. Hieraus können wiederum Rückschlüsse auf den Bearbeitungsprozess gezogen werden, mittels dem die Kante erzeugt wurde.

Da mittels des erfindungsgemäßen Verfahrens auch solche Kantendefekte erkannt werden können, die mit bloßem Auge kaum wahrgenommen werden können, kann zwischen einem "optischen Kantendefekt" und einem "physikalischen Kantendefekt" klar differenziert werden. Dabei entspricht ein "physikalischer Kantendefekte" dem tatsächlichen, geometrischen Fehler in der Kante. Ein "optischer Kantendefekt" ist ein für einen Menschen sichtbarer Fehler der Kante.

Konkret umfasst das erfindungsgemäße Verfahren die folgenden Schritte:
Schritt 1a: Beobachten eines in der Nähe der Kante liegenden Oberflächenbereichs mittels einer Bilderfassungseinrichtung aus einer zu einer Ebene des plattenförmigen Werkstücks orthogonalen Richtung. Als Erfassungseinrichtung kann eine übliche Kamera verwendet werden, die entweder direkt oder indirekt senkrecht zur Ebene des plattenförmigen Werkstücks auf die Kante schaut. "Indirekt" kann beispielsweise bedeuten, dass Spiegel oder optisch leitende Fasern zur Ablenkung der Sichtachse verwendet werden.
Schritt 1b: Beleuchten der Kante in einer zu einer Ebene des plattenförmigen Werkstücks parallelen und zu einer Längsrichtung der Kante orthogonalen Richtung. Das Licht trifft also im Wesentlichen in der Ebene des plattenförmigen Werkstücks und im Wesentlichen senkrecht zur Längserstreckung der Kante auf diese. Die Beleuchtungsachse der Lichtquelle und die Sichtachse der Bilderfassungseinrichtung stehen somit im Wesentlichen orthogonal zueinander. Auch hier kann die Beleuchtung der Kante direkt oder indirekt erfolgen, indirekt wiederum beispielsweise durch eine Ablenkung der Beleuchtungsachse mittels Spiegeln oder optisch leitenden Fasern.
Schritt 1c: Aufnehmen einer Mehrzahl von Bildern des Oberflächenbereichs mittels der Bilderfassungseinrichtung mit unterschiedlichen Belichtungszeiten. Die Anzahl der Bilder sowie die einzelnen Belichtungszeiten können dabei zum Aufnahmezeitpunkt auf der Basis der individuell vorliegenden Situation ermittelt werden, beispielsweise auf der Basis einer Farbe einer Oberfläche des Werkstücks, eines Materials, etc.. Hierzu können vorab erstellte Datensätze verwendet werden, oder die Bilderfassungseinrichtung erfasst die Situation und erstellt unmittelbar die entsprechenden Parameter beispielsweise auf der Basis von vorgegebenen Algorithmen.
Schritt 1d: Verarbeiten der Mehrzahl von Bildern zu einem HDR-Bild mittels einer automatischen Verarbeitungseinrichtung. Hierfür kann übliche Software verwendet werden, welche beispielsweise den insgesamt erfassten Bildbereich in Sektoren unterteilt, und für jeden Sektor jenes Bild aus der Mehrzahl von Bildern auswählt, welches in dem besagten Sektor den maximalen Kontrast bereitstellt.
Schritt 1e: Auswerten des im Schritt 1d erhaltenen HDR-Bilds im Hinblick auf Kantendefekte mittels einer automatischen Auswerteeinrichtung. Hier können klassische Bilderkennungstechniken zum Einsatz kommen, mit denen Kantendefekte qualitativ und/oder quantitativ bewertet werden können. Eine qualitative Bewertung kann beispielsweise darin bestehen, zu unterscheiden, ob lediglich eine Delle in einer Beschichtung oder eine Abplatzung lediglich direkt an der Oberfläche der Beschichtung vorliegt, oder ob die Beschichtung als solche abgeplatzt bzw. ausgerissen ist. Eine quantitative Bewertung kann beispielsweise darin bestehen, dass Abmessung, Tiefe, Form und/oder Lage des Kantendefekts ermittelt werden. Dabei kann ein sogenannter "Kantenfilter" für die Erkennung eines Kantendefekts verwendet werden, und zusätzlich kann danach noch aus einem abgeleiteten Bild unterhalb der Kante eine weitere Erkennung von Kantendefekten durchgeführt werden.

Bei einer Weiterbildung ist vorgesehen, dass die Schritte 1a-d für mehrere Oberflächenbereiche durchgeführt werden, die in unterschiedlichen Abständen von der Kante liegen. Hierdurch wird der Tatsache Rechnung getragen, dass sich die Beleuchtungsverhältnisse und damit der Bildkontrast mit zunehmendem Abstand von der Kante des Werkstücks und damit mit zunehmendem Abstand von der Lichtquelle verändern. Somit können auch größere Kantendefekte, die sich bis in einen Bereich in einiger Entfernung von der Kante erstrecken, zuverlässig erfasst und ausgewertet werden.

Bei einer Weiterbildung hierzu ist vorgesehen, dass eine mittlere Belichtungszeit für einen von der Kante weiter entfernten Oberflächenbereich länger ist als eine mittlere Belichtungszeit für einen näher zur Kante liegenden Oberflächenbereich. Somit wird auch für die von der Kante des Werkstücks weiter weg liegenden Oberflächenbereiche und deren mit zunehmendem Abstand von der Lichtquelle abnehmender Helligkeit ein kontrastreiches HDR-Bild hergestellt.

Bei einer Weiterbildung ist vorgesehen, dass es ferner folgende Schritte umfasst: Schritt 4a: Beobachten eines in der Nähe der Kante liegenden Oberflächenbereichs mittels einer Bilderfassungseinrichtung aus einer zu einer Ebene des plattenförmigen Werkstücks orthogonalen Richtung; Schritt 4b: Beleuchten des beobachteten Oberflächenbereichs aus der gleichen Richtung, aus der die Bilderfassungseinrichtung beobachtet; Schritt 4c: Aufnehmen einer Mehrzahl von Bildern des Oberflächenbereichs mittels der Bilderfassungseinrichtung mit unterschiedlichen Belichtungszeiten; Schritt 4d: Verarbeiten der Mehrzahl von Bildern zu einem HDR-Bild mittels der Verarbeitungseinrichtung; Schritt 4e: Auswerten der im Schritt 4d und 1d erhaltenen HDR-Bilder im Hinblick auf Kantendefekte mittels der Auswerteeinrichtung.

Es wird also zusätzlich zu der Beleuchtung der Kante in der Ebene des Werkstücks eine Beleuchtung der Kante orthogonal zur Werkstückebene, also aus der gleichen Richtung wie die Bilderfassungseinrichtung, geschaffen. Dies ermöglicht das Erkennen auch solcher Kantendefekte, die mit einer Beleuchtung in der Ebene des Werkstücks nicht zuverlässig erkannt werden können. Ferner entsteht ein Bild, aus dem auch die Struktur des Dekors sehr gut hervorgeht. Diese Aufnahme entspricht auch dem optischen Eindruck durch den Bediener. Somit können am Ende sehr gut Kantendefekte von komplexen Dekormustern und Dekorstrukturen unterschieden werden. Dabei versteht sich, dass es bevorzugt ist, dass die Beleuchtung der Kante bzw. der zu der Kante benachbarten Oberflächenbereiche nicht gleichzeitig aus den beiden unterschiedlichen Richtungen erfolgt, sondern entweder die eine Beleuchtung oder die andere Beleuchtung bzw. zuerst die eine Beleuchtung und dann die andere Beleuchtung eingeschaltet wird und die Bilder aufgenommen werden, und dann die HDR-Bilder mit dem besten Kontrast ausgewählt werden.

Bei einer Weiterbildung ist vorgesehen, dass die Kante mittels einer linienförmigen Lichtquelle beleuchtet wird, die parallel zur Längsrichtung der Kante angeordnet ist. Eine solche Beleuchtung wird auch als "Balkenbeleuchtung" bezeichnet, mit der eine homogene Dunkelfeld-Hintergrundbeleuchtung erzeugt wird. Durch eine Beleuchtung aus einer Richtung in der Ebene des plattenförmigen Werkstücks werden sehr deutlich Ausrisse an der Kante hervorgehoben, und die Struktur eines eventuell vorhandenen Dekors verschwindet, insbesondere bei einer schwachen Umgebungsbeleuchtung.

Bei einer Weiterbildung ist vorgesehen, dass die verarbeiteten Bilder unterschiedlicher Oberflächenbereiche in der Auswerteeinrichtung mittels Stitching miteinander verknüpft werden. Unter dem Begriff des "Stitching" wird in der Fotografie das Erstellen einer großen Fotografie aus verschiedenen kleineren Einzelaufnahmen bezeichnet. Am Ende erhält man auf diese Weise ein vorzugsweise vollständiges Bild der Kante des Werkstücks bzw. der zu der Kante benachbarten Oberflächenbereiche als mosaikartig zusammengesetztes Gesamtbild einzelner HDR-Bilder. Besonders hier ist es vorteilhaft, wenn Intensitätsänderungen durch Anwendung eines Filters, beispielsweise eines Gaußfilters, geglättet werden.

Bei einer Weiterbildung ist vorgesehen, dass es auf der Basis der verarbeiteten Bilder ferner die folgenden Schritte umfasst: Schritt 7a: Ermitteln eines idealen geraden Verlaufs der Kante mittels der Auswerteeinrichtung; Schritt 7b: Ermitteln einer Abweichung des tatsächlichen Verlaufs der Kante vom ermittelten idealen geraden Verlauf; Schritt 7c: Ermitteln von Kantendefekten und/oder Artefakten im Bereich der Kante und/oder eines wellenförmigen Verlaufs der Kante mittels der Auswerteeinrichtung. Wird ein wellenförmiger Verlauf der Kante festgestellt, dann können auch entsprechende charakterisierende Kenngrößen ermittelt werden, beispielsweise eine Wellenlänge und eine Amplitude. Diese Variante gestattet eine einfache Erkennung von Ausreißern und Defekten oder eines wellenförmigen Verlaufs unmittelbar an der Kante.

Bei einer Weiterbildung ist vorgesehen, dass Kantendefekte in dem Oberflächenbereich durch eine Auswertung einer Grauwertänderung zwischen benachbarten Pixeln mittels der Auswerteeinrichtung identifiziert werden. Dies ist softwaretechnisch einfach zu realisieren und führt zu zuverlässigen Auswerteergebnissen.

Bei einer Weiterbildung ist vorgesehen, dass es ferner die folgenden Schritte umfasst: Schritt 9a: Ermitteln einer Tiefe des Kantendefekts in einer Richtung orthogonal zur Werkstückebene und/oder in einer Richtung parallel zur Werkstückebene mittels der Auswerteeinrichtung; und/oder Schritt 9b: Ermitteln einer geometrischen Form des Kantendefekts (einschließlich einer eventuell vorhandenen Wellenform) mittels der Auswerteeinrichtung. Eine solch detaillierte Auswertung ermöglicht es, die Relevanz der ermittelten Kantendefekte genau zu bewerten.

Bei einer Weiterbildung ist vorgesehen, dass es ferner die folgenden Schritte umfasst: Schritt 10a: Ermitteln einer mittleren Tiefe des Kantendefekts aus einer Mehrzahl von Kantendefekten mittels der Auswerteeinrichtung, und/oder Schritt 10 b: Ermitteln eines Maximalwerts der ermittelten Tiefen einer Mehrzahl von Kantendefekten mittels der Auswerteeinrichtung. Bei einem wellenförmigen Verlauf der Kante würde dies der maximalen Amplitude entsprechen. Hierdurch wird eine zuverlässige und aussagekräftige Kenngröße geschaffen, die eine Beurteilung der Qualität der Kante des Werkstücks gestattet.

Bei einer Weiterbildung hierzu ist vorgesehen, dass im Schritt 10a die mittlere Tiefe ein gewichteter Mittelwert ist, wobei Kantendefekte mit einer größeren Tiefe stärker gewichtet werden als Kantendefekte mit einer geringeren Tiefe. Dies macht die Kenngröße noch aussagekräftiger.

Bei einer Weiterbildung ist vorgesehen, dass es ferner die folgenden Schritte umfasst: Schritt 12a: Auswerten erkannter Kantendefekte im Hinblick auf wiederkehrende Muster oder bekannte Kantendefektklassen mittels der Auswerteeinrichtung, wobei eine Kantendefektklasse durch eine bestimmte Geometrie des Kantendefekts charakterisiert ist; Schritt 12b: wenn im Schritt 12a ein wellenartiges Muster erkannt wurde: Ermitteln einer Amplitude und/oder einer Wellenlänge oder einer sonstigen Kenngröße des Musters mittels der Auswerteeinrichtung; gegebenenfalls Schritt 12c: Zuordnen der Kantenfehlerklasse und/oder des Musters zu Prozessmerkmalen mittels der Auswerteeinrichtung, beispielsweise zu einem Werkzeug oder einem Prozessparameter, beispielsweise einer Vorschubgeschwindigkeit eine Sägeblatts, etc.. Das erfindungsgemäße Verfahren gestattet es auf diese Weise, Rückschlüsse auf den Vorgang, mittels dem die Kante hergestellt wurde, zu ziehen. Im Idealfall kann eine Art geschlossener Regelkreis geschaffen werden, bei dem auf der Basis der erkannten Kantendefekte Prozessparameter verändert werden, um bei künftigen Schnitten Anzahl und Umfang der Kantendefekte zu reduzieren. Beispielsweise kann ein Sägeblatt ausgewechselt werden, es kann die Vorschubgeschwindigkeit des Sägeblatts verändert werden, etc.

Bei einer Weiterbildung ist vorgesehen, dass es ferner den folgenden Schritt umfasst: Schritt 13a: Zuordnen eines Werkstücks mittels der Auswerteeinrichtung zu einer Bewertungsklasse auf der Basis der Auswertung der ermittelten Kantendefekte, wobei eine Bewertungsklasse durch bestimmte Qualitätsanforderungen an ein Werkstück definiert ist. Somit kann direkt erkannt werden, ob ein geprüftes Werkstück den Qualitätsanforderungen entspricht oder nicht. Die Bewertungsklasse für das Werkstück kann bereits bei der Produktionsplanung dem jeweiligen Werkstück zugeordnet werden, sodass die Auswahl bei der Qualitätskontrolle der Schnittqualität bzw. der Qualität der hergestellten Kante automatisch durch eine Teileidentifikation, beispielsweise über ein Etikett, erfolgen kann. Die Bewertungsklassen können so definiert sein, dass die jeweils relevanten Merkmale der Qualität der Kante in Form von Grenzwerten vorgegeben werden. Beispielsweise kann vorgegeben sein, wie die "physikalischen Defekte" und die "optischen Defekte" berücksichtigt werden, oder ob die mittlere oder die maximale Tiefe eines Kantendefekts kontrolliert werden soll.

Aktuell ermittelte Qualitätswerte für die Qualität der Kante können beispielsweise als neue Grenzwerte für die Zuordnung zu einer Bewertungsklasse übernommen werden. Somit kann die Qualitätsgrenze auch anhand von "Grenzmustern" im Sinne von "gut/schlecht" angelernt werden. Dabei können widersprüchliche Eingaben einer Bedienperson beim Anlernen und/oder Verschieben der Grenzwerte anhand historischer Daten auf Plausibilität geprüft werden. Möglich ist dabei, das Prüfergebnis relativ zum Grenzwert beispielsweise in Form einer Ampel (grün, gelb, rot) zu visualisieren. Dabei können zusätzlich die tatsächlichen Werte angezeigt werden, beispielsweise der gewichtete Mittelwert der Tiefe der Kantendefekte. Bei der Darstellung des Ergebnisses der Qualitätsprüfung können detektierte Kantendefekte in besonderer Weise dargestellt werden. Ferner kann mit Diagrammen eine Gesamtübersicht der Merkmale der Kantendefekte entlang der Kante dargestellt werden. Möglich ist auch, die zeitliche Veränderung der Schnittqualität darzustellen.

Bei einer Weiterbildung hierzu ist vorgesehen, dass es ferner die folgenden Schritte umfasst: Schritt 14a: Vergleichen der auf der Basis der Auswertung der Kantendefekte durch die Auswerteeinrichtung vorgenommenen Zuordnung mit einer auf der Basis einer durch eine Bedienperson nach einer optischen und/oder haptischen Inspektion vorgenommenen Zuordnung; und gegebenenfalls Schritt 14b: Anpassen der Kriterien für die durch die Auswerteeinrichtung vorgenommene Zuordnung. Hierdurch kann das erfindungsgemäße Verfahren immer wieder überprüft und optimiert werden.

Zu der Erfindung gehört auch eine Plattenaufteilanlage, welche eine Auswerteeinrichtung mit einem Prozessor und einem Speicher aufweist, wobei auf dem Prozessor Programmcode ablaufen kann. Eine solche Auswerteeinrichtung kann beispielsweise ein Computer sein. Erfindungsgemäß wird vorgeschlagen, dass die Auswerteeinrichtung zur Ausführung eines Verfahrens der oben beschriebenen Art programmiert ist.

Nachfolgend werden Ausführungsformen der Erfindung unter Bezugnahme auf die beigefügte Zeichnung erläutert. In der Zeichnung zeigen:
- Figur 1: eine schematische Draufsicht auf eine Plattenaufteilanlage mit einer Vorrichtung zur Qualitätsprüfung einer Kante eines plattenförmigen Werkstücks;
- Figur 2: eine perspektivische Darstellung einer Kante eines plattenförmigen Werkstücks, einer Bilderfassungseinrichtung und einer Beleuchtungseinrichtung;
- Figur 3: eine schematische Seitenansicht der Situation von Figur 2;
- Figur 4: eine Darstellung ähnlich zu Figur 3 einer alternativen Anordnung;
- Figur 5: eine Draufsicht auf eine Kante eines plattenförmigen Werkstücks mit verschiedenen Kantendefekten; und
Figur 6 ein Flussdiagramm eines Verfahrens zur Qualitätsprüfung einer Kante eines plattenförmigen Werkstücks.

Nachfolgend tragen funktionsäquivalente Elemente und Bereiche in unterschiedlichen Figuren die gleichen Bezugszeichen.

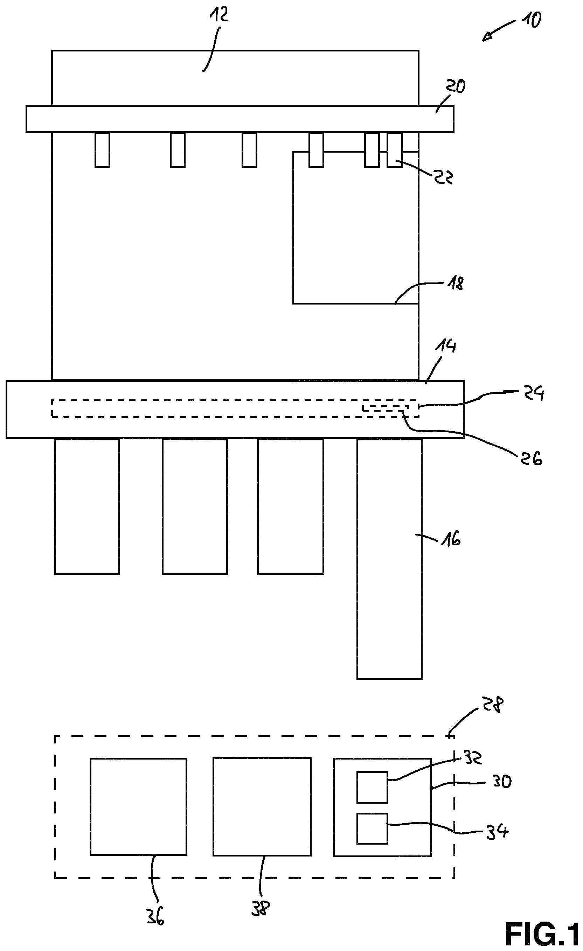

Eine Plattenaufteilanlage trägt in Figur 1 insgesamt das Bezugszeichen 10. Vorliegend handelt es sich beispielhaft um eine Plattenaufteilsäge, mit der großformatige plattenförmige Werkstücke durch Längsschnitte, Querschnitte und gegebenenfalls noch durch Nachschnitte aufgeteilt werden. Bei den Werkstücken kann es sich beispielsweise um Spanplatten handeln, die mit einer Beschichtung, beispielsweise aus Melamin, versehen sind, und die beispielsweise für die Möbelindustrie vorgesehen sind.

Zu der Plattenaufteilanlage 10 gehören ein Zuführtisch 12, ein Maschinentisch 14 und ein Entnahmetisch 16. Letzterer besteht aus mehreren Teilsegmenten, von denen nur eines mit einem Bezugszeichen versehen ist. Ein auf dem Zuführtisch 12 liegendes Werkstück 18 kann von einer Vorschubeinrichtung, vorliegend in Form eines portalartigen Programmschiebers 20, zum Maschinentisch 14 hin und zurück bewegt werden. An dem Programmschieber 20 sind mehrere Spannzangen 22 vorhanden, die einen hinteren Rand des Werkstücks 18 greifen können.

In dem Maschinentisch 14 ist ein Sägeschlitz 24 vorhanden, unterhalb von dem ein verfahrbarer Sägewagen (nicht dargestellt) angeordnet ist, auf dem ein Sägeaggregat 26 angeordnet ist. Der Sägewagen kann längs zum Sägeschlitz 24 verfahren werden, um ein dort liegendes Werkstück aufzuteilen. Der abgetrennte Teil des Werkstücks kann von einer Bedienperson am Entnahmetisch 16 entnommen werden. Möglich ist auch, dass die Handhabung alternativ oder zusätzlich durch einen nicht dargestellten Roboter erfolgt.

Die Plattenaufteilanlage 10 umfasst eine Vorrichtung 28 zur Qualitätsprüfung einer Kante eines plattenförmigen Werkstücks, die vorliegend durch einen gestrichelten Kasten angedeutet ist. Die Vorrichtung 28 wiederum umfasst einen Computer 30, der eine automatische Verarbeitungseinrichtung 32 und eine automatische Auswerteeinrichtung 34 bereitstellt. Die Plattenaufteilanlage 10 umfasst ferner eine vom Computer 30 separate und in der Zeichnung nicht gezeigte Steuer- und Regeleinrichtung, die ebenfalls als Computer ausgebildet sein kann, für die Steuerung und Regelung der Plattenaufteilanlage 10, beispielsweise den Programmschieber 20 und das Sägeaggregat 26. Ferner umfasst die Vorrichtung 28 eine Bilderfassungseinrichtung 36 und eine Beleuchtungseinrichtung 38.

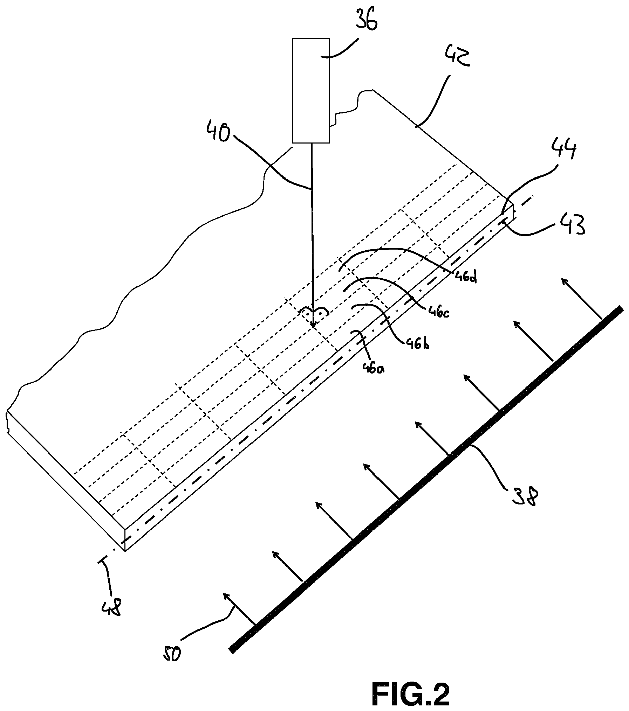

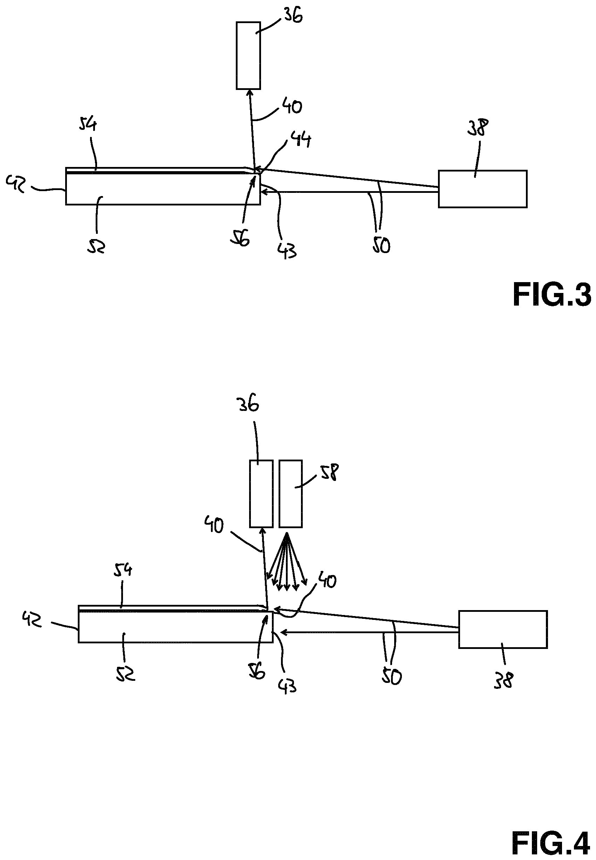

Wie insbesondere aus den Figuren 2 und 3 ersichtlich ist, kann es sich bei der Bilderfassungseinrichtung 36 um eine Kamera handeln, deren Sichtachse 40 zu einer Ebene (beispielsweise einer Mittelebene) eines plattenförmigen Werkstücks 42 orthogonal ist. Das plattenförmige Werkstück 42 weist einen Rand 43 mit einer vorliegend oberen Kante 44 auf. Der Rand 43 mit der Kante 44 wurde bei einem vorhergehenden Sägevorgang von dem Sägeaggregat 26 beim Abtrennen des Werkstücks 42 vom Werkstück 18 erzeugt. Die Bilderfassungseinrichtung 36 ist mit Ihrer Sichtachse 40 so auf das Werkstück 42 ausgerichtet, dass sie eine Mehrzahl von in der Nähe der Kante 44 liegenden Oberflächenbereichen beobachtet. Beispielhaft sind vier Oberflächenbereiche in Figur 2 mit dem Bezugszeichen 46a-d bezeichnet.

Da die Sichtachse 40 senkrecht zur Ebene des Werkstücks 42 ist, beobachtet die Bilderfassungseinrichtung 36 die Oberflächenbereiche 46a-d aus einer zu der Ebene orthogonalen Richtung. Man erkennt, dass die Oberflächenbereiche 46a-d von der Kante 44 unterschiedlich beabstandet sind. Während der Oberflächenbereich 46a unmittelbar an die Kante 44 grenzt, ist der Oberflächenbereich 46d deutlich von der Kante 44 beabstandet. Die Oberflächenbereiche 46b und c sind dazwischen angeordnet.

Bei der in den Figuren 2 und 3 gezeigten Ausführungsform ist die Beleuchtungseinrichtung 38 so angeordnet, dass diese die Kante 44 in einer zu der Ebene des plattenförmigen Werkstücks 42 parallelen und zu einer Längsrichtung 48 der Kante 44 orthogonalen Richtung 50 beleuchtet. Man erkennt aus Figur 2, dass die Beleuchtungseinrichtung 38 eine linienförmige Lichtquelle ist, die parallel zur Längsrichtung 48 angeordnet ist. Beispielsweise kann die Beleuchtungseinrichtung 38 eine Vielzahl von nebeneinander angeordneten LEDs aufweisen.

In Figur 3 ist das Werkstück 42 von der Seite gezeigt. Man erkennt, dass es einen Werkstückkörper 52, vorliegend beispielhaft aus einem gepressten Fasermaterial, wie beispielsweise für eine Spanplatte üblich, und eine Beschichtung 54, vorliegend aus Melamin aufweist. Im Bereich der Kante 44 reicht die Beschichtung 54 nicht bis zum Rand 43, sondern endet vorher. Dies ist auf einen "Ausreißer" zurückzuführen, der während des Aufteilens des Werkstücks 18, wodurch das Werkstück 42 entstand, durch das Sägeaggregat 26 erzeugt wurde, und der insoweit einen Kantendefekt 56 darstellt. Die aus der Richtung 50 auf die Kante 44 und den Kantendefekt 56 treffenden Lichtstrahlen 50 der Beleuchtungseinrichtung 38 werden vom Kantendefekt 56 in besonderer Weise zur Bilderfassungseinrichtung 36 abgelenkt bzw. gestreut. Auf diese Weise wird an dieser Stelle von der Bilderfassungseinrichtung 36 ein vergleichsweise kontrastreiches Bild erzeugt.

Bei der alternativen Ausführungsform von Figur 4 ist zusätzlich neben der Bilderfassungseinrichtung 36 und der Beleuchtungseinrichtung 38 eine weitere Beleuchtungseinrichtung 58 angeordnet, die die oben erwähnten Oberflächenbereiche, beispielsweise die Oberflächenbereiche 46a-b, aus der gleichen Richtung beleuchtet, aus der die Bilderfassungseinrichtung 36 die Oberflächenbereiche 46a-d beobachtet.

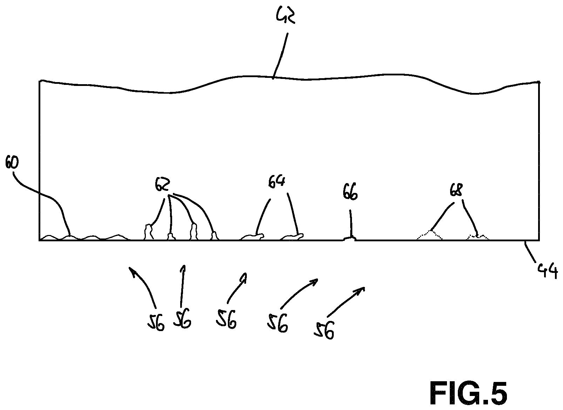

An der Kante 44 können unterschiedliche Arten von Kantendefekten 56 auftreten, wie aus Figur 5 ersichtlich ist. In Figur 5 ganz links ist beispielsweise ein wiederkehrendes Muster in Form von wellenförmigen Defekten 60 der Beschichtung 54 dargestellt. Man erkennt, dass diese wellenförmigen Defekte 60 mit einer bestimmten Wellenlänge wiederkehren und eine bestimmte Amplitude haben. In Figur 5 rechts von den wellenförmigen Defekten 60 ist ein ebenfalls wiederkehrendes Muster aus großen und kleinen Defekten 62 gezeigt, die sich unterschiedlich weit von der Kante 44 weg erstrecken. Wiederum in Figur 5 rechts neben den Defekten 62 sind zwei geometrisch ähnliche Defekte 64 dargestellt, die eine ähnliche Umrisskontur aufweisen. Rechts neben den Defekten 64 ist eine Beschädigung 66 zu sehen, die nicht nur die Beschichtung 54, sondern auch den Werkstückkörper 52 betrifft. Durch gepunktete Linien sind ganz rechts in Figur 5 noch zwei Kantendefekte 68 zu sehen, bei denen die Beschichtung 54 nicht abgeplatzt ist, sondern lediglich in der Art einer Delle zum Werkstückkörper 52 hin eingedrückt ist. Möglich wäre auch, dass es sich bei den Kantendefekten 68 lediglich um Abplatzungen an der Oberfläche der Beschichtung 54 handelt, die also dünner sind als die Dicke der Beschichtung 54.

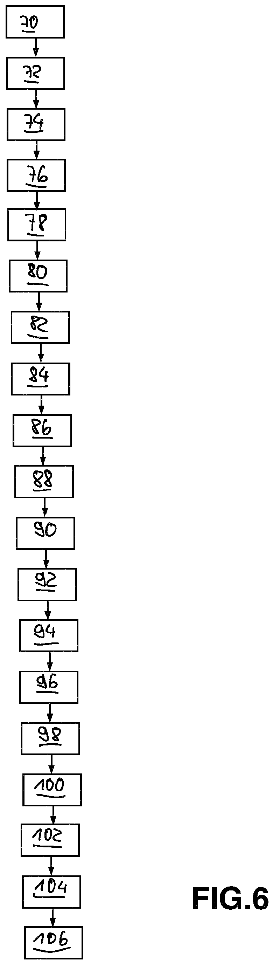

Nun wird insbesondere unter Bezugnahme auf Figur 6 ein Verfahren zur Qualitätsprüfung der Kante 44 des Werkstücks 42 erläutert. Dabei zeigt Figur 6 ein Flussdiagramm mit einer Reihe von Funktionsblöcken, die bestimmten Funktionen des Verfahrens zugeordnet sind.

Nach einem Startblock 70 werden in einem Funktionsblock 72 die Oberflächenbereiche 46a-d mittels der Bilderfassungseinrichtung 36 aus der zur Ebene des Werkstücks 42 orthogonalen Richtung 40 beobachtet. Der Funktionsblock 74 steht für die während der Beobachtung im Funktionsblock 72 erfolgenden Beleuchtung der Kante 44 des Werkstücks 42 durch die Beleuchtungseinrichtungen 38 und 58, wobei die Beleuchtungseinrichtungen 58 und 38 nicht gleichzeitig, sondern alternierend eingesetzt werden.

In einem Funktionsblock 76 werden von der Bilderfassungseinrichtung 36 Bilder der einzelnen Oberflächenbereiche 46a-d bei der entsprechenden Beleuchtung aufgenommen, und zwar wird eine Mehrzahl von Bildern des jeweils selben Oberflächenbereichs 46a-d mit unterschiedlichen Belichtungszeiten aufgenommen. Dabei ist eine mittlere Belichtungszeit beispielsweise für den von der Kante 44 maximal weit entfernten Oberflächenbereich 46d länger als eine mittlere Belichtungszeit für den direkt an der Kante 44 liegenden Oberflächenbereich 46a.

In einem Funktionsblock 78 wird für jeden Oberflächenbereich 46a-d die jeweilige Mehrzahl von aufgenommenen Bildern zu einem einzigen HDR-Bild gemäß der High Dynamic Range Technologie verarbeitet. Man erhält so ein extrem kontraststarkes Bild des jeweiligen Oberflächenbereichs 46a-b.

In einem Funktionsblock 80 werden die HDR-Bilder aller Oberflächenbereiche 46a-d (und aller anderen Oberflächenbereiche) mittels Stitching zu einem einzigen Gesamtbild zusammengesetzt. Verzerrungen der Geradheit der Bilder durch die unterschiedliche Position der einzelnen Oberflächenbereiche relativ zur Bilderfassungseinrichtung 36 werden durch geeignete Maßnahmen zur Glättung und Ausrichtung behoben, sodass am Ende die Kante 44 als mathematisch mehr oder weniger gerade Linie erkennbar ist (Funktionsblock 82). Durch die Anwendung entsprechender Filter, beispielsweise eines Gaußfilters, in einem Funktionsblock 84 erfolgt eine Glättung der Änderungen der Intensitäten.

In einem Funktionsblock 86 wird das auf diese Weise erhaltene zusammengesetzte HDR-Bild der gesamten Kante 44 (eigentlich: des zu der Kante 44 benachbarten Oberflächenbereichs der Beschichtung 54) des Werkstücks 42 im Hinblick auf das Vorhandensein von Kantendefekten 56 ausgewertet. Hierzu wird beispielsweise zunächst die Kante 44 durch einen ideal geraden Verlauf angenähert, und dann werden die Kantendefekte 56 als Abweichungen der tatsächlichen auf dem HDR-Bild sichtbaren Kante 44 des Werkstücks 42 vom ideal geraden Verlauf oder als Pixel-Artefakte im Bereich der Kante 44 ermittelt. Ferner können Kantendefekte 56 durch eine Auswertung einer Grauwertänderung zwischen benachbarten Pixeln mittels der Auswerteeinrichtung 34 identifiziert werden.

Insbesondere die Funktionsblöcke 78-84 werden in der Verarbeitungseinrichtung 42 durchgeführt. Die Auswertung ab dem Funktionsblock 86 erfolgt dagegen in der Auswerteeinrichtung 34. Dabei können die Auswerteeinrichtung 34 und die Bilderfassung 36 in dem Computer 30 durch Software realisiert sein, mit mindestens zum Teil überlappenden Funktionsbereichen.

In einem Funktionsblock 88 werden durch übliche Bilderkennungstechniken die Tiefe und die geometrischen Formen der Kantendefekte 56 ermittelt. Dabei kann unter dem Begriff "Tiefe" sowohl die Erstreckung von der Kante 44 in einer Richtung parallel zur Ebene des Werkstücks 42 und orthogonal zur Längsrichtung 48 der Kante 44 verstanden werden, als auch eine Erstreckung von der Kante 44 in einer Richtung orthogonal zur Ebene des Werkstücks 42 und orthogonal zur Längsrichtung 48 der Kante 44. Auch eine Länge eines Kantendefekts parallel zur Längsrichtung 48 der Kante 44 kann ermittelt werden. In einem Funktionsblock 90 kann dann über sämtliche ermittelten Tiefen (in einer Richtung, also entweder orthogonal zur Werkstückebene oder in der Werkstückebene) und/oder Längen ein Mittelwert gebildet werden, wobei es sich hierbei bevorzugt um einen gewichteten Mittelwert handelt. Bei diesem gewichteten Mittelwert werden Kantendefekte 56 mit einer größeren Tiefe stärker gewichtet als Kantendefekte mit einer geringeren Tiefe. In einem Funktionsblock 92 wird ferner der Maximalwert der ermittelten Tiefen (in einer Richtung) ermittelt.

Das hier vorgestellte Verfahren ermöglicht es, optische Defekte, welche für das Auge auf Grund schlechter Farbdifferenzierung (schlechter Kontrastunterschied von Beschichtung 54 zu Werkstückkörper 52) kaum wahrnehmbar sind, entsprechend zu berücksichtigen. Somit kann zwischen "optischen Defekten" und "physikalischen Defekten" klar differenziert werden. Hierbei entspricht ein "physikalischer Defekt" dem tatsächlichen, geometrischen Fehler in der Kante 44. Der "optische Defekt" ist der für den Menschen sichtbare Fehler der Kante 44.

In einem Funktionsblock 94 werden erkannte Kantendefekte 56 im Hinblick auf wiederkehrende Muster oder bekannte Kantendefektklassen mittels der Auswerteeinrichtung 34 ausgewertet, wobei eine Kantendefektklasse durch eine bestimmte Geometrie (Umrisskontur o.ä.) charakterisiert ist. Wiederkehrende Muster wurden oben beispielsweise in Form der Defekte 60 und 62 beschrieben, bestimmte Geometrien beispielsweise bei den geometrisch ähnlichen Defekten 64. Beispielsweise für die wellenförmigen Defekte 60 können dann in einem Funktionsblock 96 eine Amplitude und eine Wellenlänge des erkannten Musters mittels der Auswerteeinrichtung 34 ermittelt werden.

In einem Funktionsblock 98 können die im Funktionsblock 94 erkannten Muster bzw. Kantendefektklassen zu Prozessmerkmalen des Aufteilvorgangs zugeordnet werden, mit dem die Kante 44 hergestellt wurde. Hierzu verfügt die Auswerteeinrichtung 34 vorzugsweise über eine vorab erstellte Tabelle, die eine solche Zuordnung erlaubt. Beispielsweise kann eine bestimmte Wellenlänge mit einer bestimmten Amplitude einem bestimmten Defekt am Sägeblatt des Sägeaggregats 26 zugeordnet werden. In ähnlicher Weise können bestimmte Muster oder Kantendefektklassen bestimmten Prozessparametern, beispielsweise einer Vorschubgeschwindigkeit des Sägeaggregats 26, zugeordnet werden. Auf diese Weise kann beispielsweise erkannt werden, ob ein Austausch des Werkzeugs notwendig ist, oder ob ein Prozessparameter angepasst werden muss, um die Qualität der Kante 44 zu verbessern.

Dabei ist es grundsätzlich möglich, dass aus einer Verknüpfung von Messwerten mit Produktionsdaten der Vorrichtung 10 und/oder einer historischen Auswertung nicht plausible Ergebnisse erkannt werden. Hierdurch kann getriggert werden, dass gegebenenfalls beim nächsten Werkstück die Messung wiederholt wird. Im Falle einer bestätigten Anomalie kann auf einen instabilen Aufteilungsprozess und Beschädigungen der Werkstücke geschlossen werden. Wie oben erwähnt, sind ferner Rückschlüsse auf die Fehlerursachen möglich, beispielsweise ein Lagerschaden am Sägeaggregat 26, ein defektes Sägeblatt, etc. Möglich ist sogar, Rückschlüsse zu ziehen auf den Ort der Fehlerentstehung bezogen auf die Position an der Schnittlinie während des Aufteilprozesses. Schließlich lassen sich aus den erkannten Kantendefekten auch Rückschlüsse auf die Materialqualität ziehen.

In einem Funktionsblock 100 wird das Werkstück 42 auf der Basis der erkannten Kantendefekte 56, der mittleren und gewichteten Tiefe der Kantendefekte 56 und der ermittelten maximalen Tiefe der Kantendefekte 56 einer bestimmten Bewertungsklasse zugeordnet. Diese Bewertungsklassen definieren ein bestimmtes Qualitätsniveau. Die Soll-Bewertungsklassen werden vorab für jedes Werkstück definiert und enthalten beispielsweise Grenzwerte für die oben bezeichneten Merkmale bzw. Kantendefekte 56. Das Werkstück 42 wird dabei bei der Kontrolle der Qualität der Kante 44 der entsprechenden Bewertungsklasse zugeordnet, sodass die relevanten Merkmale geprüft werden und anhand der Grenzwerte direkt erkannt werden kann, ob die erzielte Qualität den Anforderungen entspricht oder nicht.

In einem Funktionsblock 102 wird die im Funktionsblock 100 vorgenommene Zuordnung stichprobenartig mit einer auf der Basis einer durch eine Bedienperson nach einer optischen und/oder haptischen Inspektion vorgenommenen Zuordnung verglichen, und gegebenenfalls werden die Kriterien für die durch die Auswerteeinrichtung 34 vorgenommene Zuordnung danach angepasst. Möglich ist auch, dass die erfassten Parameter der Kantendefekte 56 als neue Grenzwerte übernommen werden, sodass die Vorrichtung 28 anhand von bestimmten Grenzmustern angelernt werden kann.

In einem Funktionsblock 104 erfolgt eine Visualisierung des Prüfergebnisses. Dies kann beispielsweise in Form einer Ampel geschehen, und es können die tatsächlichen ermittelten Werte als numerische Werte angezeigt werden. Auch kann das HDR-Gesamtbild der Kante 44 dargestellt werden, und mit Diagrammen kann eine Gesamtübersicht der Defektmerkmale entlang der Kante 44 dargestellt werden. Durch eine Anzeige der Historie kann außerdem eine zeitliche Veränderung der Qualität der geschnittenen Kante 44 dargestellt werden. Das Verfahren endet in einem Funktionsblock 106.

## Patentansprüche

1. Verfahren zur Qualitätsprüfung einer Kante (44) eines plattenförmigen Werkstücks (42), welches folgende Schritte umfasst:
a. Beobachten eines in der Nähe der Kante (44) liegenden Oberflächenbereichs (46) mittels einer Bilderfassungseinrichtung (36) aus einer zu einer Ebene des plattenförmigen Werkstücks (42) orthogonalen Richtung (40);
b. Beleuchten der Kante (44) in einer zu einer Ebene des plattenförmigen Werkstücks (42) parallelen und zu einer Längsrichtung (48) der Kante (44) orthogonalen Richtung;
**dadurch gekennzeichnet, dass** das Verfahren ferner folgende Schritte umfasst:
c. Aufnehmen einer Mehrzahl von Bildern des Oberflächenbereichs (42) mittels der Bilderfassungseinrichtung (36) mit unterschiedlichen Belichtungszeiten;
d. Verarbeiten der Mehrzahl von Bildern zu einem HDR-Bild mittels einer automatischen Verarbeitungseinrichtung (32); und
e. Auswerten des im Schritt 1d erhaltenen HDR-Bilds im Hinblick auf Kantendefekte (56) mittels einer automatischen Auswerteeinrichtung (34).

2. Verfahren nach Anspruch 1, **dadurch gekennzeichnet, dass** die Schritte 1a-d für mehrere Oberflächenbereiche (46a-d) durchgeführt werden, die in unterschiedlichen Abständen von der Kante (44) liegen.

3. Verfahren nach Anspruch 2, **dadurch gekennzeichnet, dass** eine mittlere Belichtungszeit für einen von der Kante (44) weiter entfernten Oberflächenbereich (46d) länger ist als eine mittlere Belichtungszeit für einen näher zur Kante (44) liegenden Oberflächenbereich (46a) .

4. Verfahren nach wenigstens einem der vorhergehenden Ansprüche, **dadurch gekennzeichnet, dass** es ferner folgende Schritte umfasst:
a. Beobachten eines in der Nähe der Kante liegenden Oberflächenbereichs (46) mittels einer Bilderfassungseinrichtung (36) aus einer zu einer Ebene des plattenförmigen Werkstücks (42) orthogonalen Richtung;
b. Beleuchten des beobachteten Oberflächenbereichs (46) aus der gleichen Richtung (40), aus der die Bilderfassungseinrichtung (36) beobachtet;
c. Aufnehmen einer Mehrzahl von Bildern des Oberflächenbereichs (46) mittels der Bilderfassungseinrichtung (36) mit unterschiedlichen Belichtungszeiten;
d. Verarbeiten der Mehrzahl von Bildern zu einem HDR-Bild mittels der Verarbeitungseinrichtung (32);
e. Auswerten der im Schritt 4d und 1d erhaltenen HDR-Bilder im Hinblick auf Kantendefekte (56) mittels der Auswerteeinrichtung (34).

5. Verfahren nach wenigstens einem der vorhergehenden Ansprüche, **dadurch gekennzeichnet, dass** die Kante (44) mittels einer linienförmigen Lichtquelle (38) beleuchtet wird, die parallel zur Längsrichtung (48) der Kante (44) angeordnet ist.

6. Verfahren nach wenigstens einem der vorhergehenden Ansprüche, **dadurch gekennzeichnet, dass** die verarbeiteten Bilder unterschiedlicher Oberflächenbereiche (46) in der Auswerteeinrichtung (34) mittels Stitching miteinander verknüpft werden.

7. Verfahren nach wenigstens einem der vorhergehenden Ansprüche, **dadurch gekennzeichnet, dass** es auf der Basis der verarbeiteten Bilder ferner die folgenden Schritte umfasst:
a. Ermitteln eines idealen geraden Verlaufs der Kante (44) mittels der Auswerteeinrichtung (34);
b. Ermitteln einer Abweichung des tatsächlichen Verlaufs der Kante (44) vom ermittelten idealen geraden Verlauf;
c. Ermitteln von Kantendefekten (56) und/oder Artefakten im Bereich der Kante (44) und/oder eines wellenförmigen Verlaufs der Kante (44) mittels der Auswerteeinrichtung (34) aus der ermittelten Abweichung.

8. Verfahren nach wenigstens einem der vorhergehenden Ansprüche, **dadurch gekennzeichnet, dass** Kantendefekte (56) in dem Oberflächenbereich durch eine Auswertung einer Grauwertänderung zwischen benachbarten Pixeln mittels der Auswerteeinrichtung (34) identifiziert werden.

9. Verfahren nach wenigstens einem der vorhergehenden Ansprüche, **dadurch gekennzeichnet, dass** es ferner die folgenden Schritte umfasst:
a. Ermitteln einer Tiefe des Kantendefekts (56) in einer Richtung orthogonal zur Werkstückebene und/oder in einer Richtung parallel zur Werkstückebene mittels der Auswerteeinrichtung (34); und/oder
b. Ermitteln einer geometrischen Form des Kantendefekts (56) mittels der Auswerteeinrichtung (34).

10. Verfahren nach Anspruch 9, **dadurch gekennzeichnet, dass** es ferner die folgenden Schritte umfasst:
a. Ermitteln einer mittleren Tiefe des Kantendefekts (56) aus einer Mehrzahl von Kantendefekten (56) mittels der Auswerteeinrichtung (34), und/oder
b. Ermitteln eines Maximalwerts der ermittelten Tiefen einer Mehrzahl von Kantendefekten (56) mittels der Auswerteeinrichtung (34).

11. Verfahren nach Anspruch 10, **dadurch gekennzeichnet, dass** im Schritt a die mittlere Tiefe ein gewichteter Mittelwert ist, wobei Kantendefekte (56) mit einer größeren Tiefe stärker gewichtet werden als Kantendefekte (56) mit einer geringeren Tiefe.

12. Verfahren nach wenigstens einem der vorhergehenden Ansprüche, **dadurch gekennzeichnet, dass** es ferner die folgenden Schritte umfasst:
a. Auswerten erkannter Kantendefekte (56) im Hinblick auf wiederkehrende Muster oder bekannte Kantendefektklassen mittels der Auswerteeinrichtung (34), wobei eine Kantendefektklasse durch eine bestimmte Geometrie charakterisiert ist;
b. wenn im Schritt 12a ein wellenartiges Muster erkannt wurde: Ermitteln einer Amplitude und/oder einer Wellenlänge oder einer sonstigen Kenngröße des Musters mittels der Auswerteeinrichtung (34);
c. Gegebenenfalls: Zuordnen der Kantenfehlerklasse und/oder des Musters zu Prozessmerkmalen mittels der Auswerteeinrichtung (34).

13. Verfahren nach wenigstens einem der vorhergehenden Ansprüche, **dadurch gekennzeichnet, dass** es ferner den folgenden Schritt umfasst:
a. Zuordnen eines Werkstücks (42) mittels der Auswerteeinrichtung (34) zu einer Bewertungsklasse auf der Basis der Auswertung der ermittelten Kantendefekte (56), wobei eine Bewertungsklasse durch bestimmte Qualitätsanforderungen an ein Werkstück (42) definiert ist;

14. Verfahren nach Anspruch 13, **dadurch gekennzeichnet, dass** es ferner die folgenden Schritte umfasst:
a. Vergleichen der auf der Basis der Auswertung der Kantendefekte (56) durch die Auswerteeinrichtung (34) vorgenommenen Zuordnung mit einer auf der Basis einer durch eine Bedienperson nach einer optischen und/oder haptischen Inspektion vorgenommenen Zuordnung; und gegebenenfalls
b. Anpassen der Kriterien für die durch die Auswerteeinrichtung (34) vorgenommene Zuordnung.

15. Vorrichtung (28) zur Qualitätsprüfung einer Kante (44) eines plattenförmigen Werkstücks (42), welche eine Auswerteeinrichtung (34) mit einem Prozessor und einem Speicher aufweist, wobei auf dem Prozessor Programmcode ablaufen kann, **dadurch gekennzeichnet, dass** die Auswerteeinrichtung (34) zur Ausführung eines Verfahrens der vorhergehenden Ansprüche programmiert ist.
